# EUROPEAN PATENT APPLICATION

(11) **EP 3 998 131 A1**
(43) Date of publication of application: **18.05.2022**
(21) Application number: 20836007.3
(22) Date of filing: 30.06.2020
(51) Int. Cl.: B23B 51/00, B23B 51/02

(54) **DRILL**

(30) Priority: 08.07.2019 JP 2019127145
(71) Applicant: Mitsubishi Materials Corporation, Tokyo 100-8117 (JP)
(72) Inventor: SATO Akira, Tokyo 100-8117 (JP); KIMURA Tomoki, Tokyo 100-8117 (JP)
(74) Representative: Hoffmann Eitle
(86) International application number: PCT/JP2020/025667
(87) International publication number: WO 2021/006115

(57) **Abstract**

In this drill, a main cutting edge (8) is formed on a tip-side ridge portion of a chip discharge flute (6) formed on an outer periphery of a tip portion of a drill body (1), a thinning edge (9) is formed on a tip-side ridge portion of a thinning portion (7) having a concave groove shape formed on a tip inner peripheral portion of the chip discharge flute (6), when viewed from a twist direction of the chip discharge flute, a radius of an the chip discharge flute inscribed circle is in a range of 0.3 x D2 to 0.7 x D2 with respect to a diameter D2 of a second circle; in the thinning portion (7), a radius (R2) of a thinning inscribed circle (C6) is in a range of 0.3 x d to 0.7 x d with respect to a core diameter (d) when viewed in a thinning direction, and a ratio A/B between a ratio A = R1/D2 of a radius R1 to the diameter D2 and a ratio B = R2/d of the radius (R2) to the core diameter (d) is in a range of 0.8 to 1.25.

## Description

### TECHNICAL FIELD

The present invention relates to a drill, in which a chip discharge flute is formed on an outer periphery of a tip portion of a drill body to be rotated around an axis in a drill rotation direction, open to a tip flank of the drill body, and extends to be twisted to a direction opposite to the drill rotation direction toward a rear end side, a main cutting edge is formed on a tip-side ridge portion of the drill body of a wall surface of the chip discharge flute facing the drill rotation direction, a thinning portion is formed on a tip inner peripheral portion of the drill body, extends to an inner peripheral side toward a tip side of the drill body, and has a concave groove shape, and a thinning edge is formed on the tip-side ridge portion of the drill body of a thinning rake surface of the thinning portion facing the drill rotation direction and extends to an inner peripheral side of the main cutting edge.

Priority is claimed on Japanese Patent Application No. 2019-127145, filed July 8, 2019, the content of which is incorporated herein by reference.

### BACKGROUND ART

As a drill in which a thinning edge is formed, for example, Patent Document 1 describes a two-flute double margin drill having a main margin along a leading edge and a sub-margin arranged in the vicinity of a heel at two land portions, respectively. In this drill, a gap between the main margin and the sub-margin of each land portion is set to 80° to 100°, and a flank at a tip includes a flat second flank having a flank angle α1 of 5° to 12° and a flat third flank having a flank angle α2 of 15° to 23°.

Further, in the drill described in Patent Document 1, a thinning portion having a thinning surface of which an entire surface is a convex arc surface toward a front in a rotation direction of the drill is formed in a central portion of the tip in a front view of the drill, and a radial outer end of the thinning surface is disposed behind the tip of the sub-margin in the drill rotation direction to reach the outer periphery of the land portion, and a width of the sub-margin is wider than a width of the main margin.

### [Citation List]

### [Patent Document]

[Patent Document 1]
Japanese Patent No. 6108264

### SUMMARY OF INVENTION

### Technical Problem

However, in the drill described in Patent Document 1, the thinning surface of the thinning portion is an arc surface of which the entire surface is convex toward the drill rotation direction in the front view of the drill body, and the radial outer end of the thinning surface is disposed behind the tip of the sub-margin in the drill rotation direction and reaches the outer periphery of the land portion. Accordingly, as shown in Figs. 2 and 5 of Patent Document 1, a radius of the convex arc surface formed by the thinning surface is larger than a radius of a circle inscribed to a bottom surface of the chip discharge flute facing the outer peripheral side of the drill body.

For this reason, it becomes difficult to curl chips generated by a thinning edge into small pieces and divide the chips, and the chips are clogged in the chip discharge flute, which causes an increase in resistance, and there is a concern that the drill body is broken especially in deep hole drilling having a small diameter. Further, the chips generated by the thinning edge easily extend in a thinning direction connecting the points recessed on the most axis side of the bottom surface of the thinning portion, but the chips generated by the main cutting edge easily extend in a normal direction perpendicular to the main cutting edge. Therefore, the chips may interfere with each other, and it may be difficult to curl the chips into small pieces and divide the chips.

The present invention is made under such a background, and an object thereof is to provide a drill capable of curling the chips generated by the thinning edge small by the thinning portion, rectifying flows of the chips so that extension directions of the chips generated by the thinning edge are also directed to extension directions of the chips generated by the main cutting edge, for example, reliably dividing the chips even when drilling deep holes having a small diameter to prevent breakage of the drill body due to chip clogging.

### Solution to Problem

According to one aspect of the present invention, there is provided a drill including:
a chip discharge flute formed on an outer periphery of a tip portion of a drill body to be rotated around an axis in a drill rotation direction, open to a tip flank of the drill body, and extending to be twisted to a direction opposite to the drill rotation direction toward a rear end side;
a main cutting edge formed on a tip-side ridge portion of the drill body of a wall surface of the chip discharge flute facing the drill rotation direction;
a thinning portion formed on a tip inner peripheral portion of the drill body, extending to an inner peripheral side toward a tip side of the drill body, and having a concave groove shape; and
a thinning edge formed on the tip-side ridge portion of the drill body of a thinning rake surface of the thinning portion facing the drill rotation direction and connected to an inner peripheral side of the main cutting edge.
When the chip discharge flute is viewed from a twist direction of the chip discharge flute along twist of the chip discharge flute, a chip discharge flute bottom surface facing an outer peripheral side of the drill body is formed in a concave curve shape,
a first circle has a center on the axis and is inscribed to the chip discharge flute bottom surface with a diameter equal to a core diameter d of the drill body,
a second circle is concentric with the first circle and has a diameter D2 which is 1/2 of a sum d + D of a core diameter d and the diameter D of the main cutting edge,
a chip discharge flute inscribed circle passes through a contact point between the first circle and the chip discharge flute bottom surface, and two intersections between the second circle and the chip discharge flute bottom surface,
a radius R1 of the chip discharge flute inscribed circle is in a range of 0.3 × D2 to 0.7 × D2 with respect to the diameter D2 of a second circle.

Further, when the thinning portion is viewed from a thinning direction connecting points most recessed toward the axis side of a thinning bottom surface of the thinning portion facing the outer peripheral side of the drill body, a radius R2 of a thinning inscribed circle passing through an intersection of a third circle having a center at an intersection of the axis and the tip flank and having a diameter equal to the core diameter d and the thinning bottom surface, and two intersections of a fourth circle concentric with the third circle and having a diameter of 1/2 of the core diameter d and the thinning bottom surface or the thinning edge, or an extension line of the thinning edge is in a range of 0.3 × d to 0.7 × d with respect to the core diameter d.

Moreover, a ratio A/B between a ratio A = R1/D2 of the radius R1 of the chip discharge flute inscribed circle to the diameter D2 of the second circle and a ratio B = R2/d of the radius R2 of the thinning inscribed circle to the core diameter d is in a range of 0.8 to 1.25.

In the drill configured in this way, first, when viewed from the thinning direction connecting the points most recessed toward the axis side of the drill body of the thinning bottom surface of the thinning portion facing the outer peripheral side of the drill body, the radius R2 of the thinning inscribed circle passing through the intersection of the third circle having the center on the axis and inscribed to the chip discharge flute bottom surface with the diameter equal to the core diameter d and the thinning bottom surface, and the two intersections of the fourth circle concentric with the third circle and having the diameter of 1/2 of the core diameter d and the thinning bottom surface or the thinning edge, or the extension line of the thinning edge is in a range of 0.3 × d to 0.7 × d with respect to the core diameter d. Therefore, unlike the drill described in Patent Document 1, the radius of the convex arc surface formed by the thinning surface does not become larger than the radius of the circle inscribed in the bottom surface of the chip discharge flute facing the outer peripheral side of the drill body, and thus, the chips generated by the thinning edge can be curled into small pieces by sliding contact with the thinning bottom surface.

Further, in the drill having the above configuration, the ratio A/B between the ratio A = R1/D2 of the radius R1 of the chip discharge flute inscribed circle to the diameter D2 of the second circle and the ratio B = R2/d of the radius R2 of the thinning inscribed circle to the core diameter d is in a range of 0.8 to 1.25, and this ratio A/B is close to 1.

Therefore, a ratio of a curl radius to the thinning bottom surface of the chips generated by the thinning edge having a small radius centered on the axis and a ratio of a curl radius to the chip discharge flute bottom surface of the chips generated by the main cutting edge having a large radius centered on the axis can be made substantially equal to each other.

Therefore, the chips generated by the thinning edge and the main cutting edge are curled into a cone having a generating line from the thinning direction to the twist direction of the chip discharge flute, and flows of the chips generated by the thinning edge can also be rectified so that the chips extend in the normal direction perpendicular to the main cutting edge. For this reason, the chips generated by the thinning edge are curled into small pieces, which make it possible to improve chip fragmentation, and even when drilling a deep hole with a small diameter, it is possible to prevent the drill body from being broken due to chip clogging.

Here, when the radius R1 of the chip discharge flute inscribed circle is less than 0.3 × D2 with respect to the diameter D2 of the second circle, a cross-sectional area of the chip discharge flute becomes smaller and even when the ratio A/B is in the range of 0.8 to 1.25, there is a concern that chip clogging may occur. Moreover, when the radius R1 of the chip discharge flute inscribed circle exceeds 0.7 × D2 with respect to the diameter D2 of the second circle, the cross-sectional area of the chip discharge flute becomes too large, and there is a concern that strength of the drill body may be impaired. The radius R1 of the chip discharge flute inscribed circle may be in the range of 0.3 × D2 to 0.6 × D2 with respect to the diameter D2 of the second circle, and may be in the range of 0.3 × D2 to 0.5 × D2.

Further, when the radius R2 of the thinning inscribed circle is less than 0.3 × d with respect to the core diameter d, there is a concern that a resistance when the chips generated by the thinning edge are curled by the thinning bottom surface may increase. Moreover, when the radius R2 of the thinning inscribed circle exceeds 0.7 × d with respect to the core diameter d, there is a concern that the chips generated by the thinning edge may be curled to a small curl diameter and cannot be divided. The radius R2 of the thinning inscribed circle may be in the range of 0.3 × d to 0.6 × d with respect to the core diameter d, and may be in the range of 0.3 × d to 0.5 × d.

Further, when the ratio A/B exceeds or is less than the range of 0.8 to 1.25, there is a concern that the ratio of the curl radius to the thinning bottom surface of the chips generated by the thinning edge having a small radius centered on the axis and the ratio of the curl radius to the chip discharge flute bottom surface of the chips generated by the main cutting edge having a large radius centered on the axis cannot be made substantially equal to each other. For this reason, it is impossible to rectify the flows of chips so that the chips generated by the thinning edge extend in the normal direction perpendicular to the main cutting edge, and thus, there is a concern that good chip fragmentation may not be obtained. The ratio A/B may be in the range of 0.8 to 1.1 or in the range of 0.8 to 1.0.

Furthermore, in a case where the thinning rake surface is flat, when viewed from a direction perpendicular to the thinning rake surface, the thinning direction may be inclined toward an outer peripheral side at an inclination angle in a range of 10° to 55° with respect to the axis as the thinning rake surface extends toward a rear end side of the drill body. When the inclination angle is less than 10° or exceeds 55°, it may be difficult to rectify the flows of chips generated by the thinning edge and the main cutting edge as described above.

### ADVANTAGEOUS EFFECTS OF INVENTION

As described above, according to the present invention, chips generated by the thinning edge can be curled into small pieces, and the flows of the chips can be rectified so as to extend in the normal direction perpendicular to the main cutting edge, similar to the chips generated by the main cutting edge. Therefore, it is possible to improve separability of the chips generated by the thinning edge and the main cutting edge, and prevent the drill body from being broken due to chip clogging even in deep hole drilling with a small diameter.

### BRIEF DESCRIPTION OF DRAWINGS

Fig. 1 is an enlarged front view showing a tip surface according to one embodiment of the present invention when viewed from a tip side in an axis direction.
Fig. 2 is a side view of the entire drill body when viewed in a direction of an arrow W in Fig. 1.
Fig. 3 is an enlarged front view of the entire drill body shown in Fig. 2 when viewed from the tip side in the axis direction.
Fig. 4 is a side view of the entire drill body when viewed in a direction of an arrow X in Fig. 1.
Fig. 5 is an enlarged perspective view of a tip portion of the drill body according to the embodiment shown in Fig. 1.
Fig. 6 is an enlarged side view of the tip portion of the drill body when viewed in a direction of an arrow Y in Fig. 1.
Fig. 7 is an enlarged side view of the tip portion of the drill body when viewed in a direction of an arrow Z in Fig. 1.
Fig. 8 is an enlarged side view of the tip portion of the drill body shown in Fig. 2.
Fig. 9 is a perspective view of the embodiment shown in Fig. 1 when viewed from the tip side of the drill body along the twist direction of the chip discharge flute.
Fig. 10 is a perspective view of the embodiment shown in Fig. 1 when viewed from the tip side of the drill body along a thinning direction.
Fig. 11 is an enlarged front view of the vicinity of an axis of a tip surface of the embodiment shown in Fig. 1.
Fig. 12 is a side view of the entire drill body showing a first modification example of the embodiment shown in Figs. 1 to 11.
Fig. 13 is a side view of the entire drill body showing a second modification example of the embodiment shown in Figs. 1 to 11.

### DESCRIPTION OF EMBODIMENTS

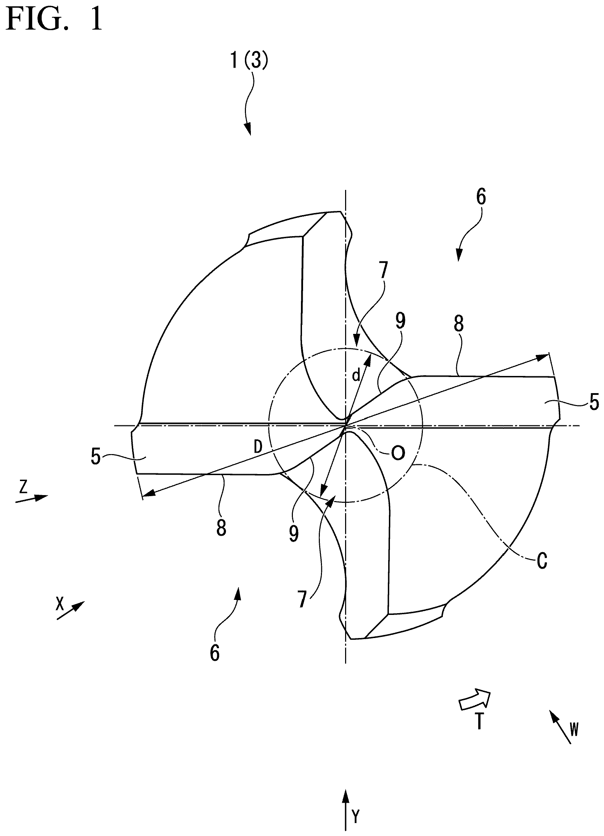

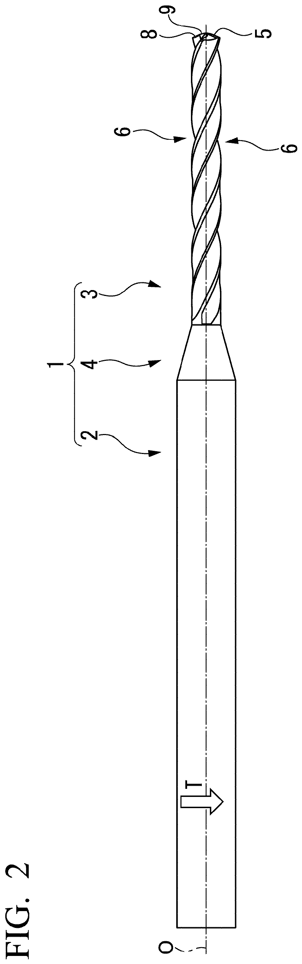

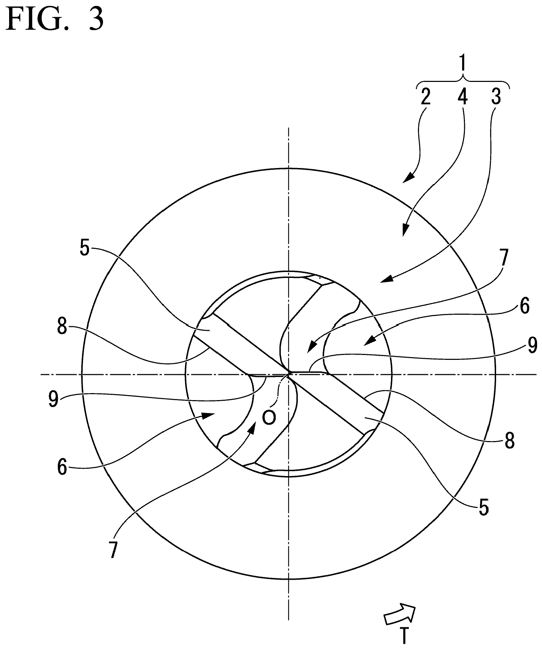

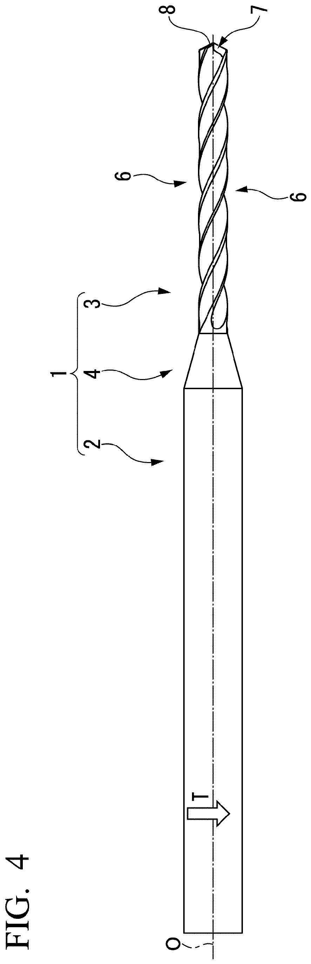

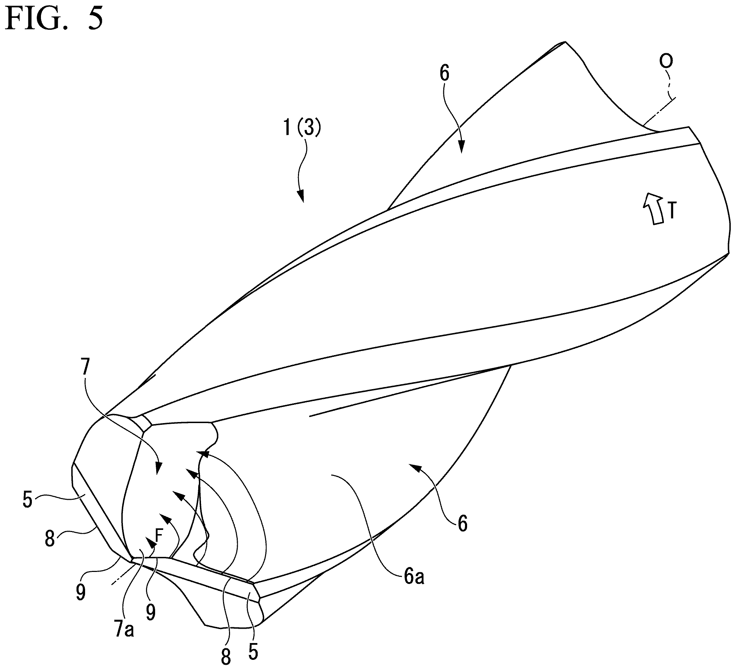

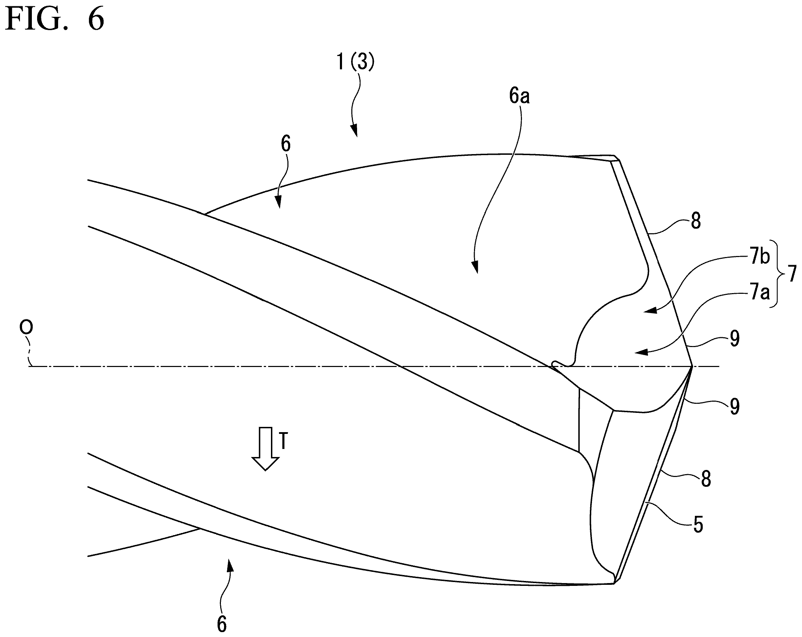

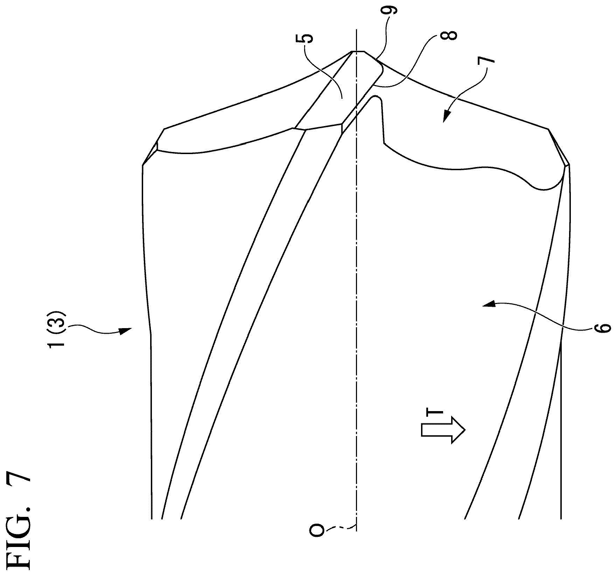

Figs. 1 to 11 show one embodiment of the present invention. In the present embodiment, a drill body 1 is integrally formed of a hard metal material such as cemented carbide in a multi-stage columnar shape centered on an axis O. A rear end portion having a large diameter (left portion in Figs. 2 and 4, 6 to 10 and upper right portion in Fig. 5) of the drill body 1 is a columnar shank portion 2, and a tip portion having a small diameter (right portion in Figs. 2 and 4, right portion in Figs. 6 to 10, and lower left portion in Fig. 5) is a cutting edge portion 3.

In the drill, the shank portion 2 is gripped by a spindle of a machine tool, the drill body 1 is fed out to the tip side in the axis O direction while being rotated around the axis O in a drill rotation direction T, and the cutting edge portion 3 is used to make a hole in a work material. The shank portion 2 and the cutting edge portion 3 are connected to each other by a truncated cone-shaped tapered portion 4 centered on an axis O of which a diameter gradually decreases toward the tip side of the drill body 1.

A plurality of (two in the present embodiment) chip discharge flutes 6 are formed on an outer periphery of the cutting edge portion 3, and the chip discharge flutes 6 are open to a tip flank 5 which is a tip surface of the drill body 1, twisted at a constant twist angle in a direction opposite to the drill rotation direction T around the axis O toward the rear end side, formed symmetrically with respect to the axis O, and extend to the front of the tapered portion 4. In the present embodiment, the tip flank 5 is a two-step tip flank 5 in which a flank angle is increased by one step toward a side opposite to a drill rotation direction T.

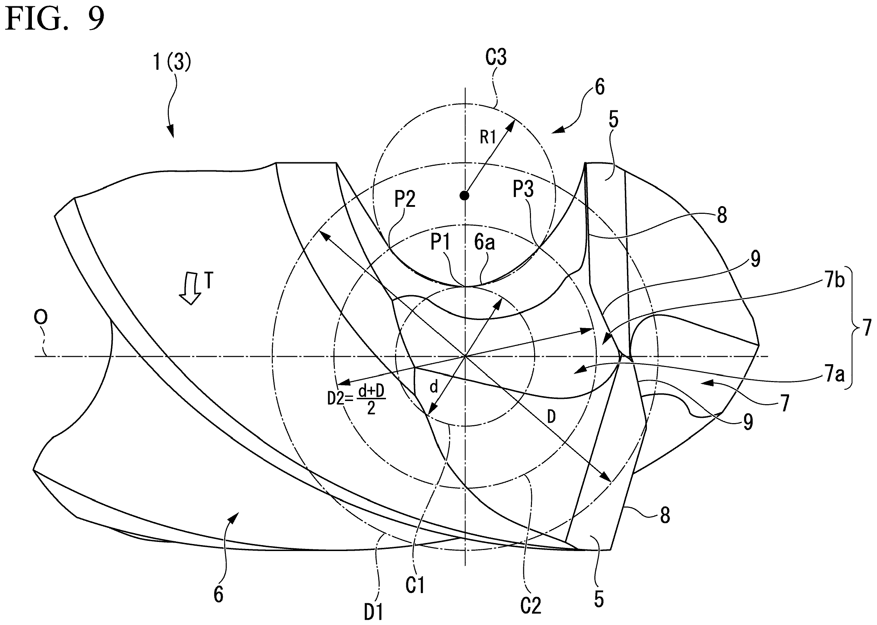

When the chip discharge flute 6 is viewed from the twist direction of the chip discharge flute which is the direction of the twist angle, a chip discharge flute bottom surface 6a facing the outer peripheral side of the drill body 1 has a concave curve shape as shown in Fig. 9, and the concave curve is substantially concave arc in the present embodiment. The twist angle of the chip discharge flute 6 is set to be in a range of 10° to 50°, preferably in the range of 25° to 30° in the present embodiment.

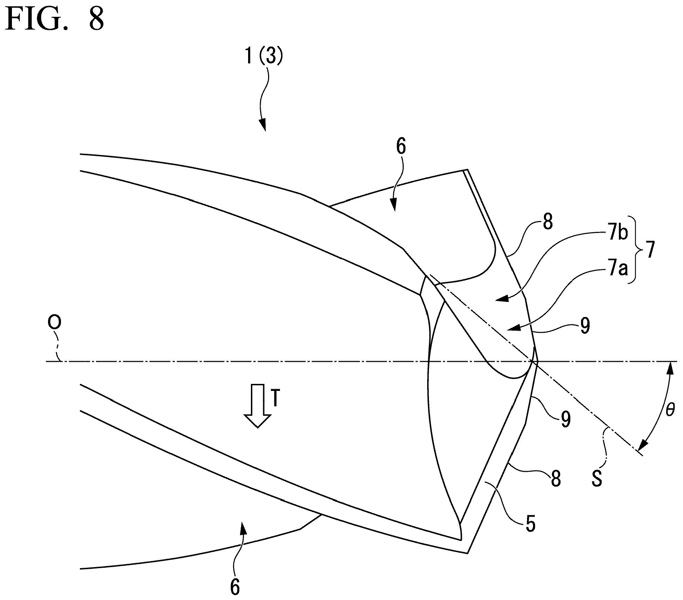

Further, a concave groove-shaped thinning portion 7 is formed on a tip inner peripheral portion of the chip discharge flute 6 so as to extend to cut out the chip discharge flute bottom surface 6a toward the inner peripheral side toward the tip side of the drill body 1. A thinning bottom surface 7a of the thinning portion 7 facing the outer peripheral side of the drill body 1 is formed so as to have a concave curve shape when viewed from a thinning direction (direction indicated by an arrow S in Fig. 8) connecting the points most recessed toward the axis O side of the thinning bottom surface 7a, and this concave curve also has a substantially concave arc shape in the present embodiment.

Further, a main cutting edge 8 having a wall surface as a cutting face is formed at an intersecting ridge line portion with the tip flank 5, which is a tip-side ridge portion of the drill body 1 on the wall surface of the chip discharge flute 6 facing the drill rotation direction T. Furthermore, the wall surface of the thinning portion 7 facing the drill rotation direction T is a thinning rake surface 7b, and the thinning edge 9 connected to the inner peripheral side of the main cutting edge 8 is formed at the intersecting ridge line portion of the thinning rake surface 7b with the tip flank 5 which is the tip-side ridge portion of the drill body 1. The main cutting edge 8 and the thinning edge 9 have a tip angle given toward the rear end side toward the outer peripheral side of the drill body 1.

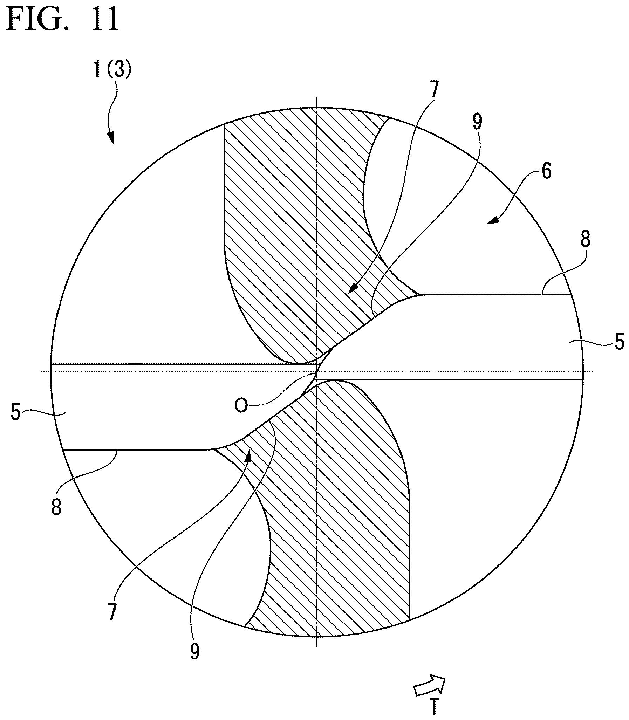

In the present embodiment, the wall surface of the chip discharge flute 6 which is the cutting face of the main cutting edge 8 and faces the drill rotation direction T is formed to be a flat around the main cutting edge 8, and thus, the main cutting edge 8 is formed in a straight line as shown in Fig. 11 when viewed from the tip side in the axis O direction. Further, the thinning rake surface 7b is also formed to be flat in the present embodiment, and thus, the thinning edge 9 is also formed in a straight line as shown in Fig. 11 when viewed from the tip side in the axis O direction, and the thinning edge 9 and the main cutting edge 8 are connected to each other via a convex curved portion that is convex in the drill rotation direction T.

Further, as shown in Fig. 9, when the chip discharge flute bottom surface 6a is viewed from the twist direction of the chip discharge flute, a radius R1 of a chip discharge flute inscribed circle C3 passing through a contact point P1 between a first circle C1 which has the center on the axis O and is inscribed to the chip discharge flute bottom surface 6a with a diameter d equal to a core diameter d (diameter of core diameter circle C shown in Fig. 1) of the cutting edge portion 3 of the drill body 1, and the chip discharge flute bottom surface 6a, and two intersections P2 and P3 between a second circle C2 which is concentric with the first circle C1 and has a diameter D2 which is 1/2 of a sum d + D of a core diameter d and the diameter D (shows circle D1 having diameter D of the main cutting edge 8 in Fig. 9) of the main cutting edge 8 and the chip discharge flute bottom surface is in a range of 0.3 × D2 to 0.7 × D2 with respect to the diameter D2 of the second circle C2.

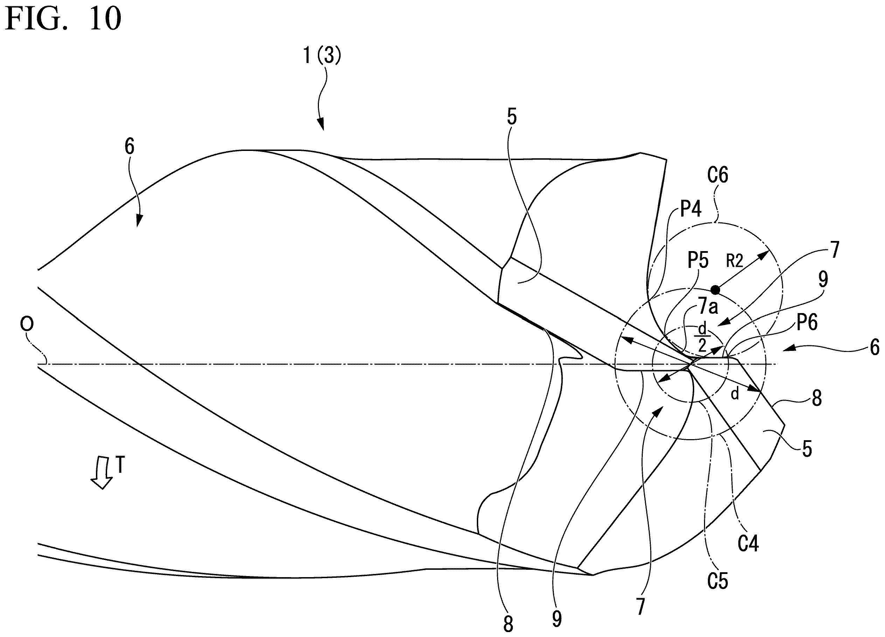

Further, as shown in Fig. 10, when the thinning portion 7 is viewed from the thinning direction S, a radius R2 of a thinning inscribed circle C6 passing through an intersection P4 of a third circle C4 having a center at an intersection of the axis O and the tip flank 5 and having a diameter d equal to the core diameter d and the thinning bottom surface 7a, and two intersections P5 and P6 of a fourth circle C5 concentric with the third circle C4 and having a diameter of 1/2 of the core diameter d and the thinning bottom surface 7a or the thinning edge 9, or an extension line of the thinning edge 9 is in a range of 0.3 × d to 0.7 × d with respect to the core diameter d.

Further, the ratio A = R1/D2 of the radius R1 of the chip discharge flute inscribed circle C3 to the diameter D2 of the second circle C2, and the radius R2 of the thinning inscribed circle C6 and the core diameter d. The ratio A/B with the ratio B = R2/d is in the range of 0.8 to 1.25. In the present embodiment, as shown in Fig. 8, when viewed from a direction perpendicular to the thinning rake surface 7b, the thinning direction S is inclined toward an outer peripheral side at an inclination angle θ in a range of 10° to 55° with respect to the axis O as the thinning rake surface 7b extends toward a rear end side of the drill body 1.

In the drill configured in this way, the radius R2 of the thinning inscribed circle C6 is in the range of 0.3 × d to 0.7 × d with respect to the core diameter d when viewed from the thinning direction S. Therefore, the chips generated by the thinning edge 9 can be curled into small pieces by sliding against the thinning bottom surface 7a having a small radius of curvature along the thinning inscribed circle C6. Therefore, it is possible to prevent the chips generated by the thinning edge 9 from extending and causing clogging.

Further, in the drill having the above configuration, a ratio A/B between a ratio A = R1/D2 of the radius R1 of the chip discharge flute inscribed circle C3 which is substantially equal to the radius of the chip discharge flute bottom surface 6a, and the diameter D2 of the second circle C2, and a ratio B = R2/d of the radius R2 of the thinning inscribed circle C6 substantially equal to the radius of the thinning bottom surface 7a and the core diameter d is in the range of 0.8 to 1.25. Therefore, the ratio A/B is set to a value close to 1, that is, the ratio A and the ratio B are substantially equal to each other in magnitude.

Therefore, a ratio of a curl radius of the chip to the thinning bottom surface 7a to which the chip generated by the thinning edge 9 having a small radius centered on the axis O is in sliding contact and a ratio of a curl radius to the chip discharge flute bottom surface 6a to which the chip generated by the main cutting edge 8 having a large radius centered on the axis O is in sliding contact can be made substantially equal to each other.

Therefore, the chips generated by the thinning edge 9 and the main cutting edge 8 can be curled into a cone having a generating line from the thinning direction S to the twist direction of the chip discharge flute, and flows of the chips generated by the thinning edge 9 can also be rectified as shown by an arrow F in Fig. 5 so that the chips extend in the normal direction perpendicular to the main cutting edge 8. Therefore, as described above, the chips generated by the thinning edge 9 are curled into small pieces, and the chip fragmentation can be improved. Accordingly, even when drilling a deep hole with a small diameter, it is possible to prevent the drill body 1 from being broken due to chip clogging.

Here, when the radius R1 of the chip discharge flute inscribed circle C3 is less than 0.3 × D2 with respect to the diameter D2 of the second circle C2, a cross-sectional area of the chip discharge flute 6 becomes smaller and even when the ratio A/B is in the range of 0.8 to 1.25, there is a concern that chip clogging may occur. Meanwhile, when the radius R1 of the chip discharge flute inscribed circle C3 exceeds 0.7 × D2 with respect to the diameter D2 of the second circle C2, the cross-sectional area of the chip discharge flute 6 becomes too large, the thickness of the drill body 1 decreases, and thus, there is a concern that strength of the drill body 1 may be impaired.

Regarding a relationship between the radius R1 of the chip discharge flute inscribed circle C3 and the diameter D of the main cutting edge 8, the radius R1 of the chip discharge flute inscribed circle C3 may be in a range of 0.1 × D to 0.5 × D with respect to the diameter D of the main cutting edge 8, and when the radius R2 of the thinning inscribed circle C6 is in a range of 0.3 × d to 0.7 × d with respect to the core diameter d, a ratio X/B between a ratio X = R1/D of the radius R1 of the chip discharge flute inscribed circle C3 and the diameter D of the main cutting edge 8 and a ratio B = R2/d between a ratio of the radius R2 of the thinning inscribed circle C6 and the core diameter d may be in the range of 0.3 to 0.9.

Further, when the radius R2 of the thinning inscribed circle C6 is less than 0.3 × d with respect to the core diameter d, there is a concern that a resistance when the chips generated by the thinning edge 9 are curled by the thinning bottom surface 7a may increase. Meanwhile, when the radius R2 of the thinning inscribed circle C6 exceeds 0.7 × d with respect to the core diameter d, there is a concern that the chips which are generated by the thinning edge 9 and slide on the thinning bottom surface 7a may be curled to a small curl diameter and cannot be divided.

Further, when the ratio A/B exceeds or is less than the range of 0.8 to 1.25, there is a concern that the ratio of the curl radius to the thinning bottom surface 7a of the chips generated by the thinning edge 9 and the ratio of the curl radius to the chip discharge flute bottom surface 6a of the chips generated by the main cutting edge 8 having a large radius centered on the axis O cannot be made substantially equal to each other. For this reason, it is impossible to rectify the flows of chips so that the chips generated by the thinning edge 9 extend in the normal direction perpendicular to the main cutting edge 8, and thus, there is a concern that good chip fragmentation may not be obtained.

In a case where the thinning rake surface 7b is flat as in the present embodiment, when viewed from a direction perpendicular to the thinning rake surface 7b, it is desirable that the thinning direction S is inclined toward an outer peripheral side at an inclination angle θ in a range of 10° to 55° with respect to the axis O as the thinning rake surface 7b extends toward a rear end side of the drill body 1. When the inclination angle is less than 10° or exceeds 55°, it may be difficult to rectify the flows of chips generated by the thinning edge 9 and the main cutting edge 8 as described above.

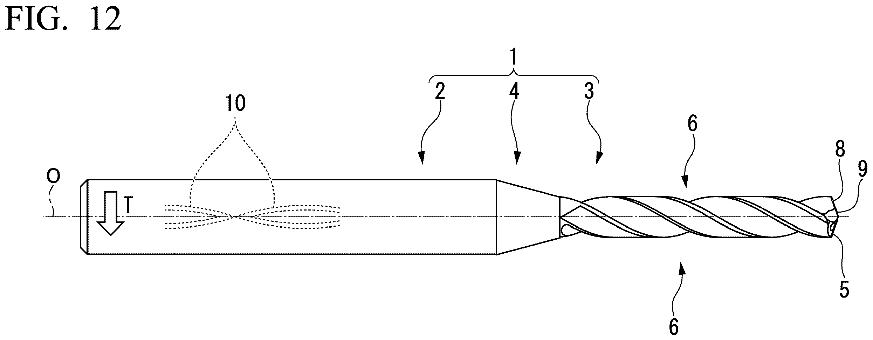

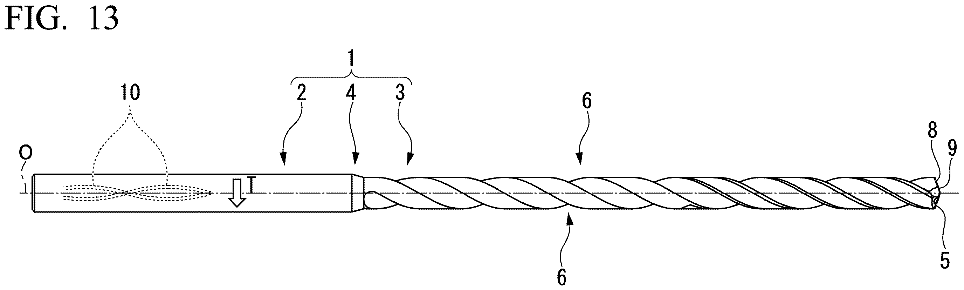

Next, Figs. 12 and 13 show first and second modification examples of the embodiments shown in Figs. 1 to 11, and the same signs are assigned to portions common to those of the embodiments shown in Figs. 1 to 11. Common to these modification examples, from the rear end surface of the shank portion 2 of the drill body 1 to the cutting edge portion 3, the same number of coolant holes 10 as the chip discharge flute 6 are formed so as to pass through between the chip discharge flutes 6 in the circumferential direction and open to the tip flank 5. At the time of drilling, coolant such as a cutting fluid and compressed air is supplied through the coolant hole 10 and discharged to the main cutting edge 8, the thinning edge 9, and the cutting portion of the work material.

Further, in the first modification example shown in Fig. 12, a total length of the drill body 1 including the shank portion 2 and the cutting edge portion 3 is shorter than those of the embodiments shown in Figs. 1 to 11, and in the second modification example shown in Fig. 13, the length of the chip discharge flute 6 of the cutting edge portion 3 is longer and the diameter of the shank portion 2 is smaller compared to the embodiments shown in FIGS. 1 to 11. Even in the first and second modification examples, the same effects as those of the embodiments shown in Figs. 1 to 11 can be obtained by adopting the above-described configuration of the present invention.

In the above-described embodiments and the above-mentioned first and second modification examples, the case where the present invention is applied to a twist drill of two edges having two main cutting edges 8 and two thinning edges 9 is described. However, each of the main cutting edge 8 and the thinning edge 9 may be one, and the present invention can be also applied to a twist drill of three edges or more having three or more main cutting edges and thinning edges.

### INDUSTRIAL APPLICABILITY

According to the present invention, chips generated by the thinning edge can be curled into small pieces, and the flows of the chips can be rectified so as to extend in the normal direction perpendicular to the main cutting edge, similar to the chips generated by the main cutting edge. Therefore, it is possible to improve separability of the chips generated by the thinning edge and the main cutting edge, and prevent the drill body from being broken due to chip clogging even in deep hole drilling with a small diameter.

### REFERENCE SIGNS LIST

1: Drill body
2: Shank portion
3: Cutting edge portion
4: Tapered portion
5: Tip flank
6: Chip discharge flute
6a: Chip discharge flute bottom surface
7: Thinning portion
7a: Thinning bottom surface
7b: Thinning rake surface
8: Main cutting edge
9: Thinning edge
10: Coolant hole
O: Axis of drill body 1
T: Drill rotation direction
D: Diameter of main cutting edge 8
C: Core diameter circle
d: Core diameter
C1: First circle
C2: Second circle
C3: Chip discharge flute inscribed circle
C4: Third circle
C5: Fourth circle
C6 Thinning inscribed circle
D1: Circle concentric with first circle C1 and having diameter D of main cutting edge 8 when viewed from twist direction of chip discharge flute.
D2: Diameter of second circle (diameter of 1/2 of sum d + D of core diameter d and diameter D of main cutting edge 8)
P1: Contact point between first circle C1 and chip discharge flute bottom surface 6a when viewed from twist direction of chip discharge flute.
P2, P3: Intersection of second circle C2 and chip discharge flute bottom surface 6a
P4: Intersection of thinning bottom surface 7a and third circle C4 when viewed from thinning direction S
P5, P6: Intersection of third circle C4 and extension line of thinning bottom surface 7a or thinning edge or thinning edge
R1: Radius of chip discharge flute inscribed circle C3
R2: Radius of thinning inscribed circle C6
S: Thinning direction

## Claims

1. A drill comprising:
a chip discharge flute formed on an outer periphery of a tip portion of a drill body to be rotated around an axis in a drill rotation direction, open to a tip flank of the drill body, and extending to be twisted to a direction opposite to the drill rotation direction toward a rear end side;
a main cutting edge formed on a tip-side ridge portion of the drill body of a wall surface of the chip discharge flute facing the drill rotation direction;
a thinning portion formed on a tip inner peripheral portion of the drill body, extending to an inner peripheral side toward a tip side of the drill body, and having a concave groove shape; and
a thinning edge formed on the tip-side ridge portion of the drill body of a thinning rake surface of the thinning portion facing the drill rotation direction and connected to an inner peripheral side of the main cutting edge,
wherein when the chip discharge flute is viewed from a twist direction of the chip discharge flute along twist of the chip discharge flute, a chip discharge flute bottom surface facing an outer peripheral side of the drill body is formed in a concave curve shape,
a first circle has a center on the axis and is inscribed to the chip discharge flute bottom surface with a diameter equal to a core diameter d of the drill body,
a second circle is concentric with the first circle and has a diameter D2 which is 1/2 of a sum d + D of a core diameter d and the diameter D of the main cutting edge,
a chip discharge flute inscribed circle passes through a contact point between the first circle and the chip discharge flute bottom surface, and two intersections between the second circle and the chip discharge flute bottom surface,
a radius R1 of the chip discharge flute inscribed circle is in a range of 0.3 × D2 to 0.7 × D2 with respect to the diameter D2 of a second circle,
when the thinning portion is viewed from a thinning direction connecting points most recessed toward the axis side of a thinning bottom surface of the thinning portion facing the outer peripheral side of the drill body, a radius R2 of a thinning inscribed circle passing through an intersection of a third circle having a center at an intersection of the axis and the tip flank and having a diameter equal to the core diameter d and the thinning bottom surface, and two intersections of a fourth circle concentric with the third circle and having a diameter of 1/2 of the core diameter d and the thinning bottom surface or the thinning edge, or an extension line of the thinning edge is in a range of 0.3 × d to 0.7 × d with respect to the core diameter d, and
a ratio A/B between a ratio A = R1/D2 of the radius R1 of the chip discharge flute inscribed circle to the diameter D2 of the second circle and a ratio B = R2/d of the radius R2 of the thinning inscribed circle to the core diameter d is in a range of 0.8 to 1.25.

2. The drill according to claim 1,
wherein the thinning rake surface is flat, and when viewed from a direction perpendicular to the thinning rake surface, the thinning direction is inclined toward an outer peripheral side at an inclination angle in a range of 10° to 55° with respect to the axis as the thinning rake surface extends toward a rear end side of the drill body.
